Europäisches Patentamt

European Patent Office

Office européen des brevets

(11) Veröffentlichungsnummer: **0 230 991**
**A2**

## (12) EUROPÄISCHE PATENTANMELDUNG

(21) Anmeldenummer: 87100920.5

(22) Anmeldetag: 23.01.87

(51) Int. Cl.⁴: **B 01 D 53/26**

(30) Priorität: 31.01.86 DE 3603043

(43) Veröffentlichungstag der Anmeldung:
05.08.87 Patentblatt 87/32

(84) Benannte Vertragsstaaten: **DE FR IT NL SE**

(71) Anmelder: **KNORR-BREMSE AG**
**Moosacher Strasse 80 Postfach 401060**
**D-8000 München 40 (DE)**

(72) Erfinder: **Ruess, Leopold**
**Trollblumenstrasse 19a**
**D-8000 München 50 (DE)**

**Unger, Hans**
**St. Benediktstrasse 7**
**D-8044 Unterschleissheim (DE)**

(54) Trocknungspatrone für Lufttrocknungsanlagen, insbesondere für Druckluftbremsanlagen von Fahrzeugen.

(57) Bei einer Trocknungspatrone für Lufttrocknungsanlagen, insbesondere für Druckluftbremsanlagen von Fahrzeugen, ist der das Trocknungsmittel tragende, vorzugsweise durch einen Ringfilter (35) umgebene Einsatztopf (II) schnellöslich in einem Gehäusetopf (I: 43) aufgenommen und durch einen Deckel (29: 4I) verschlossen. Der Deckel (29: 4I) ist mittels eines Sprengringes (33: 45) oder dergleichen Halteelement schnellöslich am Gehäusetopf einrastbar. wobei im eingebauten Zusatand eine auf dem Einsatztopf (II) aufliegende Druckfeder (27) gegenüber dem Inneren des Deckels verspannt ist. Der das Trocknungsmittel aufnehmende Einsatztopf (II) besitzt an seiner oberen Stirnseite eine schnellösliche Verbindung mit einer das Trocknungsmittel abschließenden Lochscheibe (I5). derart. daß die Lochscheibe (I5) mit einem vorzugsweise zusammen mit ihr verwendeten Drahtsieb (I9) vom Einsatztopf (II) abnehmbar ist. um einen unmittelbaren Austausch des Trocknungsmittels vornehmen zu können. Die Trocknunspatrone ihrerseits besitzt eine schnellösliche Verbindung mit dem sie tragenden Gehäuse der Regeleinrichtung der Lufttrocknungsanlage. derart. daß die Trocknungspatrone selbst als Wegwerfteil gehandhabt werden kann.

Fig.1

Bundesdruckerei Berlin

EP 0 230 991 A2

## Beschreibung

Trocknungspatrone für Lufttrocknungsanlagen, insbesondere für Druckluftbremsanlagen von Fahrzeugen

Die Erfindung betrifft eine Trocknungspatrone nach dem Gattungsbegriff des Patentanspruches I.

Es sind Trocknungspatronen für Lufttrocknungsanlagen der in Rede stehenden Art bekannt, bei welchen ein ein Trocknungsmittel enthaltender Einsatztopf im Inneren eines Gehäuses gehaltert ist. Das Gehäuse einer derartigen Trocknungspatrone ist seinerseits an einem Unterbau befestigt, so z.B. am Gehäuse einer Regeleinrichtung für die Lufttrocknungsanlage.

Bei einem Austausch der Trocknungspatrone ist es erforderlich, diese mit einem verhältnismäßig großen Aufwand zu demontieren und auseinanderzunehmen, um das im Inneren des Einsatztopfes befindliche Trocknungsmittel und/oder einen zusätzlichen Ringfilter austauschen und warten zu können. Es sind auch Konstruktionen bekannt, bei welchen die gesamte Trocknungspatrone als Wegwerfteil gehandhabt, d.h. nach ausreichend langem Gebrauch in seiner Gesamtheit weggeworfen wird. Obwohl die vorstehend beschriebenen Maßnahmen für bestimmte Einsatzzwecke ausreichen mögen, kann es sich als erforderlich und erwünscht zeigen, den unterschiedlichen Bedürfnissen der Kunden derartiger Trocknungspatronen Rechnung zu tragen. Im besonderen kann es aus Kostengründen erwünscht sein, eine Trocknungspatrone so auszugestalten, daß sie mit einem Minimum von Aufwand an Zeit und Geld eingesetzt bzw. gewartet werden kann. Die Aufgabe der vorliegenden Erfindung besteht darin, diesen Bedürfnissen Rechnung zu tragen.

Zur Lösung dieser Aufgabe dienen die Merkmale nach dem Kennzeichnungsteil des Patentanspruches I.

Die Trocknungspatrone nach der Erfindung ist universell handhabbar, d.h. es bieten sich im wesentlichen drei Möglichkeiten unterschiedlicher Wartung und unterschiedlichen Austausches an. Die Trocknungspatrone kann in ihrer Gesamtheit als Wegwerfteil gehandhabt werden; zusätzlich ist es jedoch auch möglich, die äußere Hülle der Patrone in ihrer Montageposition zu belassen und den inneren Einsatztopf herauszunehmen, um diesen entweder als Wegwerfteil zu handhaben oder um ihn einer Wartung zuzuführen. Im letztgenannten Fall ist es in einfacher Weise möglich, das im Einsatztopf befindliche Trocknungsmittel durch manuelle Maßnahmen herauszunehmen und durch ein frisches Trocknungsmittel zu ersetzen. Dies kann jeweils bei in Montageposition befindlichem Gehäusetopf der Trocknungspatrone geschehen. Der das Innere der Patrone verschließende Deckel kann durch Lösen des Sprengringes in sehr einfacher Weise abgenommen werden; befindet sich die Trocknungspatrone im Betrieb, ist sie also erhöhten Druckbedingungen im Inneren ausgesetzt, so ist ihr Deckel in jedem Fall sicher am Gehäusetopf gehalten, ohne daß ein unbeabsichtigtes Lösen oder Lockern erfolgen könnte.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.

Fig.I ist eine Schnittansicht einer Trocknungspatrone nach einer ersten Ausführungsform gemäß der Erfindung;

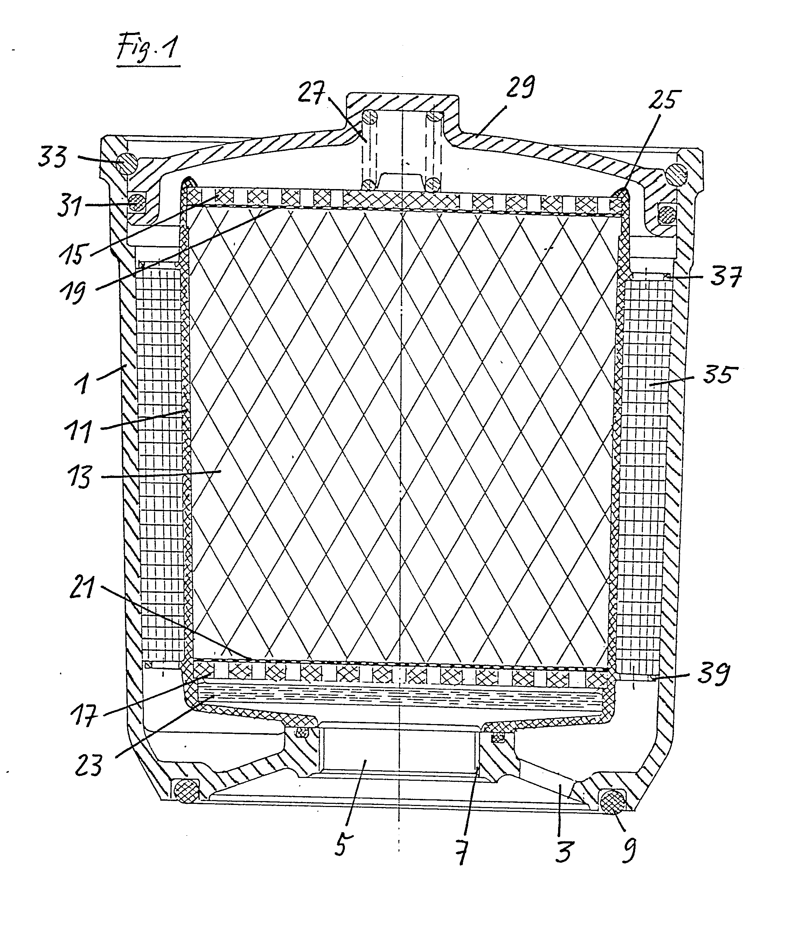

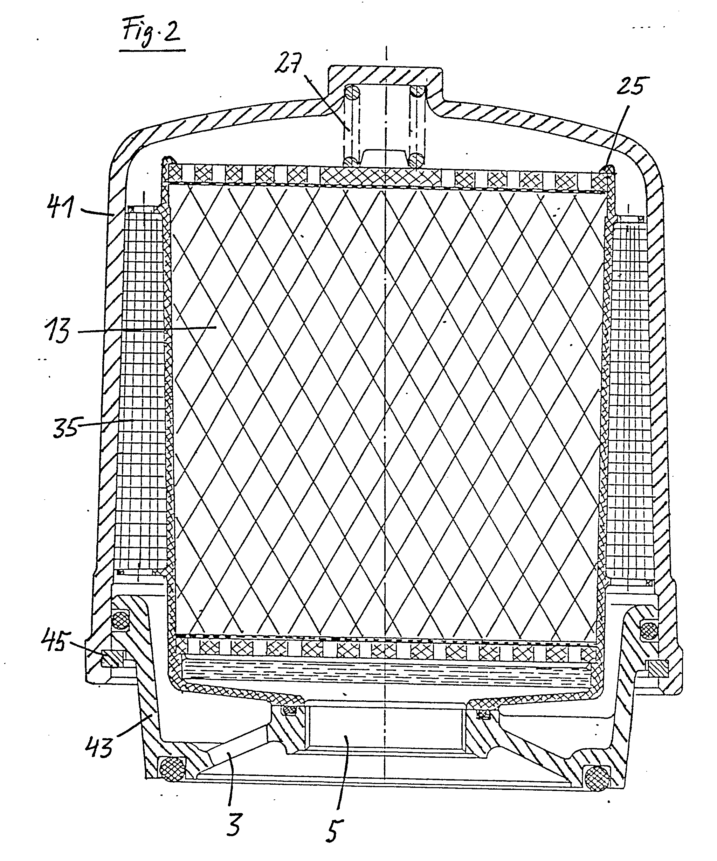

Fig.2 ist eine Schnittansicht einer Trocknungspatrone nach einer weiteren Ausführungsform gemäß der Erfindung.

Die in Fig.I der Zeichnung dargestellte Trocknungspatrone nach der Erfindung weist einen Gehäusetopf I auf, an dessen Unterseite mehrere Öffnungen 3 unter Winkelabstand zueinander vorgesehen sind; in der Mitte der Unterseite des Gehäusetopfes befindet sich eine zentrale Öffnung 5, welche ein Innengewinde 7 zur Befestigung der Trocknungspatrone am (nicht dargestellten) Gehäuse einer Regeleinrichtung für den Lufttrockner aufweisen kann. Es können auch andere Befestigungen für diesen Zweck verwendet werden. Gemäß Darstellung ist die Unterseite des Gehäusetopfes im Bereich des Außenumfanges mit einem Dichtungsring 9 versehen, welcher abdichtend gegenüber dem (nicht dargestellten) Gehäuse der Regeleinrichtung zu liegen kommt. Im Inneren der Trocknungspatrone befindet sich ein Einsatztopf II, in welchem sich das an sich bekannte Trocknungsmittel I3 der Trocknungspatrone befindet. Das Trocknungsmittel ist gemäß Darstellung an der Ober- und Unterseite je durch eine Lochscheibe I5 bzw. I7 begrenzt, wobei sich zwischen den Lochscheiben und dem Trocknungsmittel jeweils ein Drahtseib I9 bzw. 2I befindet. Im dargestellten Ausführungsbeispiel nach der Erfindung ist unterhalb der Lochscheibe I7 zusätzlich ein Filzkörper 23 eingesetzt, welcher in der Lage ist, durch Abrieb entstandene Partikel des Trocknungsmittels zu binden, derart, daß eine Verunreinigung der Luft vermieden wird.

Am oberen Ende des Einsatztopfes II, welcher vorzugsweise aus Kunststoff besteht, besitzt dieser Haltenasen 25, welche in dargestellter Weise die Außenkante der Lochscheibe I5 übergreifen. Die Haltenasen, welche unter Abstand am Umfang der oberen Kante des Einsatztopfes II vorgesehen sein können, lassen sich federnd nach außen gerichtet biegen, derart, daß die Lochscheibe in nachfolgend beschriebener Weise vom Einsatztopf II gelöst werden kann. Auf die Oberseite der Lochscheibe I5 drückt eine Druckfeder 27, welche sich an ihrem entgegengesetzten Ende an einem Deckel 29 mittig abstützt. Der Deckel 29 ist mittels eines Dichtringes 3I gegenüber dem Innenumfang des Gehäusetopfes I abgedichtet und wird mit Hilfe eines Sprengringes 33 am Gehäusetopf I gehaltert. Der Einsatztopf II ist durch einen Ringfilter 35 umgeben, welcher gemäß Darstellung an oberen und unteren, jeweils Öffnungen aufweisenden und radial auskragenden Schultern 37 und 39 abgestützt ist. Der Ringfilter 35 wird im allgemeinen als Bandkörper um den Einsatztopf II herumgelegt, derart, daß die Enden einander gegenüberliegen. Sollte der Ringfilter 35 nach einer weiteren Ausführungsform als geschlossener Ringkörper bestehen, so kann die Schulter 39 z.B. durch einen Sprengring ersetzt sein.

In Fig. 2 der Zeichnung ist eine Ausführungsform der Trocknungspatrone dargestellt, bei welcher der Deckel 4I topfförmig ausgebildet ist, d.h. er dient gleichzeitig zur Aufnahme des Einsatztopfes II mit dem Ringfilter und dem Trocknungsmittel. Der Gehäusetopf der Ausführungsform nach Fig. I ist in diesem Fall durch einen Gehäusetopf 43 von wesentlich flacherer Konfiguration ersetzt. Auch bei der Ausführungsform nach Fig.2 ist der Deckel 4I mit Hilfe eines Sprengringes 45 oder mit Hilfe eines vergleichbaren, schnellöslichen Befestigungselementes am Gehäusetopf 43 befestigbar.

Die vorstehend unter Bezugnahme auf Fig.I und 2 beschriebe Trocknungspatrone für Lufttrocknungsanlagen kennzeichnet sich durch mehrere Möglichkeiten der Wartung und des Austausches der in der Patrone enthaltenen Bauteile. So ist es bei der Trocknungspatrone nach der Erfindung möglich, nach Abnahme des Deckels 29 bzw. 4I den im Inneren befindlichen Einsatztopf II in seiner Gesamtheit herauszuheben und durch einen neuen Einsatztopf zu ersetzen. Der Einsatztopf ist hierbei als Wegwerfteil vorgesehen, ohne daß es erforderlich wäre, die umhüllenden Teile, d.h. den Gehäusetopf und den Deckel ebenfalls wegzuwerfen.

Sollte es sich aus Kosten- und Zeitgründen nicht als zweckmäßig erweisen, den Austausch des Einsatztopfes II vorzunehmen, dann ist es auch möglich, die gesamte Trocknungspatrone als Wegwerfteil zu handhaben. In diesem Fall wird die Trocknungspatrone von dem sie tragenden (nicht dargestellten) Gehäuse der Regeleinrichtung abgeschraubt und durch eine neue Trocknungspatrone ersetzt.

Nach einer dritten Handhabungsmöglichkeit der Trocknungspatrone kann bei abgenommenem Dekkel die in der Darstellung obere Lochscheibe I5 zusammen mit dem Drahtsieb I9 abgenommen werden, um das Trocknungsmittel I3 durch ein frisches Trocknungsmittel zu ersetzen. In diesem Fall ist es lediglich erforderlich, die am Umfang des Einsatztopfes befindlichen Haltenasen 25 elastisch zurückzubiegen, so daß die Lochscheibe I5 und das Drahtsieb I9 herausgenommen werden können. Diese Maßnahme geschieht zweckmäßigerweise bei aus dem Gehäusetopf herausgehobenem Einsatztopf II: bei der Ausführungsform nach Fig.I könnte der direkte Austausch des Trocknungsmittels auch bei im Gehäusetopf belassenem Einsatz geschehen. Fernerhin kann man bei Bedarf einen Austausch des Ringfilters 35 vornehmen, ohne gleichzeitig das Trocknungsmittel austauschen zu müssen. Die vorstehend beschriebene Entnahme des Einsatztopfes ist bei den Ausführungsformen nach Fig.I und 2 in einfacher Weise manuell durchführbar. Hierbei wird bei abgeschalteter Lufttrocknungsanlage manuell ein Druck auf den Deckel entgegen der Kraft der Druckfeder ausgeübt, so daß der jeweils verwendete Sprengring 33 bzw. 45 entweder manuell oder mit einer geeigneten Zange herausgezogen werden kann. In jedem Falle erreicht die zur Verfügung stehende manuelle Kraft aus, den Deckel auf die vorgenannte Weise zu lösen und zu entfernen.

Die Trocknungspatrone nach der vorliegenden Erfindung kennzeichnet sich somit durch eine universelle Handhabungsmöglichkeit, die es erlaubt, die Patrone als Wegwerfteil zu verwenden, den Einsatztopf als Wegwerfteil zu handhaben bzw. nur das Trocknungsmittel bei belassenem Einsatztopf und belassenem Gehäusetopf auszutauschen. Die Möglichkeiten der Handhabung sind hierbei den Gegebenheiten bei den Benutzern der Lufttrocknungsanlagen angepaßt. Als Folge davon können im jeweiligen Fall Wartungs- und Lagerkosten im Betrieb mit Lufttrocknungsanlagen der in Rede stehenden Art auf ein Mindestmaß reduziert werden.

Der Deckel 29 ist in der Ausführungsform nach Fig. I am Innenumfang des Gehäusetopfes I arretiert; natürlich kann der Deckel den Gehäusetopf auch von außen umfassen, derart, daß er z.B. am Außenumfang des Gehäusetopfes mittels eines Sprengringes oder dgl. befestigt wird. Entsprechendes gilt auch für die Konstruktion nach Fig.2, d.h. der Deckel 4I kann auch am Innenumfang des Gehäusetopfes 43 mittels eines schnellöslichen Befestigungselements arretierbar sein, wenngleich die in Fig.2 wiedergegebene Anordnung aus Gründen räumlicher Zuordnung von besonderem Vorteil ist.

**Bezugszeichenliste**

I = Gehäusetopf
3 = Öffnung
5 = Öffnung
7 = Innengewinde
9 = Dichtungsring
II = Einsatztopf
I3 = Trocknungsmittel
I5 = Lochscheibe
I7 = Lochscheibe
I9 = Drahtsieb
2I = Drahtsieb
23 = Filzkörper
25 = Haltenase
27 = Druckfeder
29 = Deckel
3I = Dichtring
33 = Sprengring
35 = Ringfilter
37 = Schulter
39 = Schulter
4I = Deckel
43 = Gehäusetopf
45 = Sprengring

**Patentansprüche**

I. Trocknungspatrone für Lufttrocknungsanlagen, insbesondere für Druckluftbremsanlagen von Fahrzeugen, mit einem in einem Gehäusetopf gehalterten, ein Trocknungsmittel enthaltenden Einsatztopf, dadurch gekennzeichnet, daß der Gehäusetopf (I; 43) mit einem schnellöslichen Deckel (29; 4I) geschlossen ist, und daß sich eine Druckfeder (27) zwischen dem

Einsatztopf (II) und der Innenseite des Deckels abstützt.

2. Trocknungspatrone nach Anspruch I, dadurch gekennzeichnet, daß der Deckel mittels eines am Innenumfang des Gehäusetopfes (I) rastierbaren Sprengringes (33) am Gehäusetopf (I) fixierbar ist.

3. Trocknungspatrone nach Anspruch I, dadurch gekennzeichnet, daß der Deckel (4I) topfförmig ausgebildet ist und sich im wesentlichen über die gesamte axiale Baulänge des Einsatztopfes (II), diesen umschließend, erstreckt, daß der Gehäusetopf (43) flachschalig ausgebildet ist, und daß der Deckel (4I) mittels eines Sprengringes (45) am Außenumfang des Gehäusetopfes (43) schnellöslich gehaltert ist.

4. Trocknungspatrone nach einem der vorangehenden Ansprüche, dadurch gekennzeichnet, daß der Gehäusetopf (I; 43) Mittel (Innengewinde 7) zur Befestigung der Trocknungspatrone an einem Unterbau (z.B. Gehäuse einer Regeleinrichtung) aufweist, derart, daß die Trocknungspatrone als Wegwerfteil handhabbar ist.

5. Trocknungspatrone nach einem der vorangehenden Ansprüche, dadurch gekennzeichnet, daß der im Inneren der Trocknungspatrone gehalterte, sich einerseits am Gehäusetopf und andererseits mittelbar über die Druckfeder am Deckel abstützende Einsatztopf (II) für das Trocknungsmittel einen schnellöslichen Verschluß aufweist, derart, daß das Trocknungsmittel austauschbar ist.

6. Trocknungspatrone nach Anspruch 5, dadurch gekennzeichnet, daß die beiden Stirnseiten des Einsatztopfes (II) je durch eine vorzugsweise ein Drahtsieb tragende Lochscheibe (I5,I7) geschlossen sind, und daß die dem Deckel (29; 4I) zugewandte, eine Ende der Druckfeder (27) abstützende Lochscheibe (I5) schnellöslich am Umfang des Einsatztopfes (II) befestigt ist.

7. Trocknungspatrone nach Anspruch 5 oder 6, dadurch gekennzeichnet, daß der Einsatztopf (II) aus Kuststoff besteht, und daß an seinem dem Deckel zugewandten Rand unter Abstand zueinander elastische Haltenasen (25), die Lochscheibe (I5) übergreifend, vorgesehen sind.

8. Trocknungspatrone nach einem der vorangehenden Ansprüche, dadurch gekennzeichnet, daß am Außenumfang des Einsatztopfes (II) ein von auskragenden Schultern (37,39) desselben axial gehaltener Ringfilter (35) vorgesehen ist.

9. Trocknungspatrone nach Anspruch 8, dadurch gekennzeichnet, daß der Ringfilter zwischen dem Außenumfang des Einsatztopfes und dem Innenumfang des Gehäusetopfes angeordnet ist.

I0. Trocknungspatrone nach Anspruch 8, dadurch gekennzeichnet, daß der ringfilter zwischen dem Außenumfang des Einsatztopfes und dem Innenumfang des topfartig ausgebildeten Deckels (4I) angeordnet ist.

Fig.1

Fig. 2

0230991